# FASCICULE DE BREVET EUROPEEN

(11) **EP 0 589 735 B1**
(45) Date de publication et mention de la délivrance du brevet: **14.05.1997**
(21) Numéro de dépôt: 93402091.8
(22) Date de dépôt: 24.08.1993
(51) Int. Cl.: F16J 13/24, B64G 1/64

(54) **Dispositif d'ouverture retardée d'un récipient**
Zeitverschobene Öffnungsvorrichtung eines Behälters
Delayed opening system of a vessel

(30) Priorité: 26.08.1992 FR 9210282
(43) Date de publication de la demande: 30.03.1994
(73) Titulaire: AEROSPATIALE Société Nationale Industrielle, 75781 Paris Cédex 16 (FR)
(72) Inventeur: Luciano, Gérard, F-06610 La Gaude (FR)
(74) Mandataire: Dubois-Chabert, Guy

(56) Documents cités:
- EP-A- 0 296 936
- EP-A- 0 456 950
- FR-A- 2 589 974
- US-A- 4 155 579

## Description

### Domaine technique

La présente invention concerne un dispositif de fermeture d'un récipient, par exemple d'un conteneur, à ouverture retardée.

L'invention trouve une application dans le domaine spatial.

Un tel dispositif est destiné plus particulièrement à l'ouverture d'un conteneur éjecté dans l'espace à partir d'un véhicule spatial lorsque l'on désire que l'ouverture de ce conteneur intervienne quelques secondes après son éjection dans le vide spatial.

### Etat de la technique antérieure

Dans le domaine des dispositifs à ouverture retardée, une demande de brevet français FR-A-2 589 974, déposée le 7 novembre 1985, décrit un dispositif pneumatique de commande à distance et de temporisation de l'ouverture d'une vanne. Ce dispositif comprend une temporisation pneumatique formée par un premier élément de volume variable auquel sont associés des premiers moyens de rappel vers un volume maximum, ainsi que des moyens de vidage à soupape et de remplissage lent par de et par un second élément de volume variable muni de seconds moyens de rappel vers un volume maximum, relié au premier élément de volume variable par une tubulure de liaison étanche. Ce second élément de volume variable est associé à la vanne et est apte à modifier l'ouverture de celle-ci, la position d'ouverture minimum de la vanne étant obtenue pour le volume maximum de ce second élément de volume variable. La capacité de ce second élément de volume variable et la force de rappel exercée sur celui-ci sont inférieures respectivement à la capacité et à la force de rappel du premier élément de volume variable.

Un tel dispositif est destiné plus particulièrement aux réseaux d'extraction de l'air vicié dans les logements, réseaux dans lesquels des vannes de réglage sont prévues pour permettre aux utilisateurs d'augmenter ou de diminuer le volume d'air extrait en fonction de leurs besoins. De telles vannes équipent plus particulièrement les pièces dites techniques, cuisines, salles de bain..., et peuvent être commandées, de façon à permettre un accroissement temporaire de la ventilation aux heures dites "de pointe".

Ce dispositif, ainsi que les autres dispositifs de l'art connu, présente l'inconvénient d'utiliser des mécanismes de poids non négligeable, ce qui est rédhibitoire dans le domaine spatial qui est celui de l'invention : tout gain en poids se traduisant par un gain financier important.

La présente invention a donc pour objet un dispositif de fermeture d'un récipient à ouverture retardée lorsque ce dernier est exposé brutalement au vide, ce dispositif étant de très faible poids.

### Exposé de l'invention

L'invention propose à cet effet un dispositif assurant la fermeture et, après déclenchement, l'ouverture retardée d'un récipient , ledit dispositif formant un couvercle coiffant un orifice dudit récipient et comprenant des moyens pneumatiques de rappel assurant et retardant l'ouverture dont le déclenchement s'opère par sa mise instantanée dans un environnement de très faible pression.

Avantageusement ce dispositif comprend au moins un boîtier muni de moyens d'articulation avec ledit récipient situés en un premier emplacement, de moyens de fermeture situés en un second emplacement et les moyens pneumatiques de rappel enclenchés lors du changement de pression.

Avantageusement les moyens de rappel comprennent au moins un ballonnet étanche contenant de l'air à la pression atmosphérique, un espaceur en forme de "U" étant disposé dans ce ballonnet. Chaque ballonnet est constitué d'un boudin thermosoudé à ses deux extrémités après introduction de l'espaceur. Les moyens d'articulation comprennent un morceau de ruban adhésif. Les moyens de fermeture comprennent une sangle.

Avantageusement ce dispositif est formé de deux boîtiers superposés : un premier boîtier assurant la fermeture à pression atmosphérique et l'ouverture à très faible pression, un second boîtier assurant la fonction de retard à l'ouverture.

Avantageusement le second boîtier comprend un ballonnet retard percé d'un ou de plusieurs trous(s) calibré(s) dont le diamètre correspond à un temps déterminé de retard à l'ouverture.

Dans une réalisation particulièrement avantageuse de L'invention, le premier boîtier, qui constitue par son corps le couvercle du récipient, est relié au récipient sur un côté par l'intermédiaire d'un premier morceau de ruban adhésif faisant office de charnière, et est maintenu en position fermée grâce à une sangle fixée d'une part sur le côté du récipient opposé à la charnière et d'autre part enclenché dans le second boîtier, en ce que ce premier boîtier contient un premier ballonnet étanche contenant un premier espaceur élastique en forme de "U", en ce que le second boîtier est fixé sur le premier boîtier, de la même manière que le premier boîtier est fixé sur le récipient, par l'intermédiaire d'un second morceau de ruban adhésif faisant office de charnière, le corps de ce second boîtier comportant sur sa partie inférieure un décalage servant de butée de verrouillage pour une contreplaque fixée à l'extrémité de la sangle par un troisième morceau de ruban adhésif permettant à la contreplaque de s'articuler autour de l'extrémité de la sangle, un volet étant articulé dans le coin supérieur du corps par l'intermediaire d'un fil passant au travers de trous percés dans le corps et le volet, un second ballonnet, percé d'un (ou de plusieurs) trou(s) calibré(s), constitué de façon identique au premier ballonnet et contenant un second espaceur élastique en forme de "U" est logé au-dessus du volet, ce volet étant rappelé vers le bas grâce à l'élasticité de cet espaceur.

Il est à noter que l'ouverture du récipient étanche et la temporisation à l'ouverture sont déclenchées par la mise à très faible pression du récipient. Cette mise à très faible pression doit être instantanée. Avantageusement la durée du retard à l'ouverture est réglable à volonté.

Le dispositif de l'invention, qui peut être réalisé en plastique, permet d'obtenir un gain important au niveau du poids de l'ordre de 50 %. Il est, de plus, d'une grande simplicité de réalisation : il ne nécessite par exemple aucun apport de source d'énergie.

Avantageusement ce dispositif peut s'adapter sur n'importe quel conteneur rigide de section parallélépipédique s'ouvrant à une extrémité.

### Brève description des dessins

- La figure 1 illustre schématiquement une vue en coupe longitudinale d'un conteneur coiffé par le dispositif de l'invention ;
- les figures 2 à 5 sont des schémas illustrant le fonctionnement du dispositif représenté à la figure 1.

### Exposé détaillé de modes de réalisation

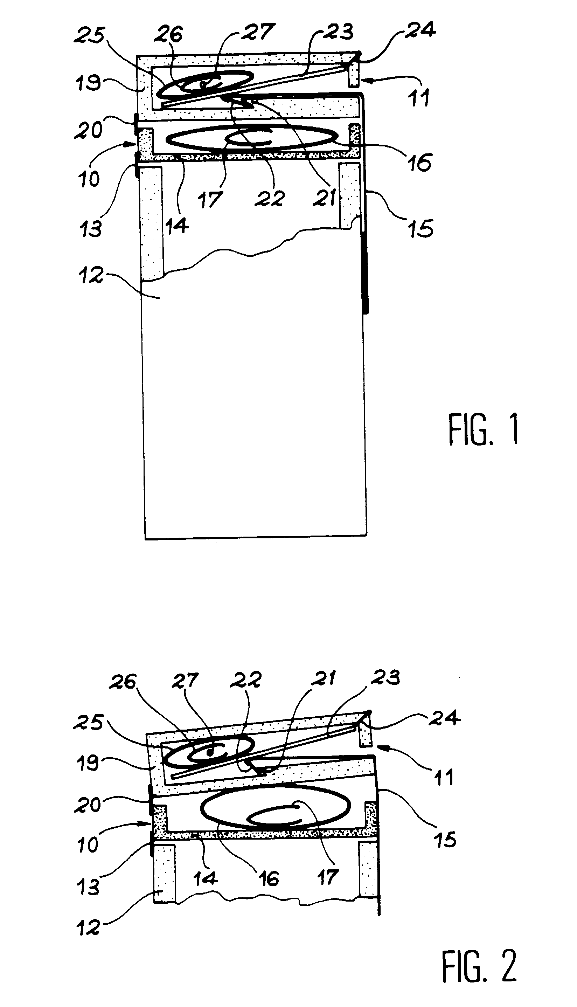

Comme représenté sur la figure 1, le dispositif de l'invention est formé de deux boîtiers superposés : un boîtier moteur 10 et un boîtier retard 11.

Le boîtier moteur 10 assure la fermeture à pression atmosphérique et l'ouverture à très faible pression de l'ordre de 0,1 millibar, que l'on dénommera "vide" dans la suite de la description, d'un récipient, par exemple un conteneur 12.

Le boîtier moteur 10 est relié au conteneur 12 sur un côté par l'intermédiaire d'un morceau de ruban adhésif 13, par exemple du Kapton adhésif, faisant office de charnière. Il constitue par son corps 14 le couvercle du conteneur 12.

Le boîtier moteur 10 est maintenu en position "conteneur fermé" grâce à une sangle 15, par exemple en Kapton, fixée d'une part sur le côté du conteneur 12 opposé à la charnière 13 et d'autre part enclenchée dans le boîtier retard 11.

D'autre part le boîtier moteur 10 contient un ballonnet étanche 16 appelé "ballonnet moteur" constitué d'un boudin, par exemple en polyamide, thermosoudé à ses deux extrémités contenant de l'air à la pression atmosphérique. Un espaceur 17 constitué d'un élément élastique en forme de "U", par exemple en Kapton préformé, introduit dans le boudin 16 avant de fermer ses extrémités permet de piéger un certain volume d'air à l'intérieur du ballonnet lors de la thermosoudure des extrémités.

Le boîtier retard 11 assure la fonction de retard à l'ouverture du conteneur 12.

Le boîtier retard 11 est fixé sur le boîtier moteur 10 de la même manière que le boîtier moteur 10 est fixé sur le conteneur 12, par l'intermédiaire d'un morceau de ruban adhésif 20 faisant office de charnière.

Le corps 19 du boîtier retard 11 comporte sur sa partie inférieure un décalage 21 servant de butée de verrouillage pour une contreplaque 22 rigide, par exemple en époxy, fixée à l'extrémité de la sangle 15. Cette contreplaque 22 est fixée à l'extrémité de la sangle 15 par un morceau de ruban adhésif permettant à la contreplaque de s'articuler autour de l'extrémité de la sangle 15.

Un volet 23, par exemple en époxy, est articulé dans le coin supérieur du corps 19 par l'intermédiaire d'un fil 24 passant au travers des trous percés dans le corps 19 et le volet 23.

Un ballonnet 25 appelé "ballonnet retard" constitué de façon identique au ballonnet moteur 16 et contenant un même espaceur 26 que l'espaceur 17 est logé au-dessus du volet 23. Ce volet 23 est rappelé vers le bas grâce à l'élasticité de cet espaceur 26 logé dans le ballonnet retard 25. Ce ballonnet 25 est percé d'un (ou de plusieurs) trou(s) calibré(s) 27 dont le diamètre correspond à un temps déterminé de retard à l'ouverture du dispositif de l'invention.

Plus le diamètre du trou ou des trous de fuite 27 du ballonnet retard 25 est petit, plus le retard à l'ouverture du dispositif sera grand. Ce retard peut varier de quelques dizièmes de secondes (pour par exemple une vingtaine de trous d'un dizième de millimètre de diamètre) à une minute ou plus (pour par exemple un trou d'un diamètre de quelques centièmes de millimètre de diamètre).

Les corps 14 et 19 des deux boîtiers 10 et 11 sont réalisés par exemple en Delrin.

Le dispositif de l'invention fonctionne de la façon décrite ci-après :

La figure 1 présente l'état du dispositif de l'invention à la pression atmosphérique.

Ainsi que le montre la figure 2, lors de la mise instantanée au vide, les deux ballonnets 16 et 25 des boîtiers moteur 10 et retard 11 sont soumis à une différence de pression de un bar et ont tendance à se gonfler et à occuper un volume maximal.

Le ballonnet moteur 16, en se gonflant, a tendance à séparer le boîtier moteur 10 du boîtier retard 11. Les deux boîtiers 10 et 11 étant articulés sur un côté (en 13 et 20), l'effort du ballonnet moteur 16 provoque le mise en tension de la sangle 15 située du côté opposé. Cette tension a tendance à faire tourner la contreplaque 22 autour de son point d'appui sur le corps 19 du boîtier retard 11. La rotation de la contreplaque 22 a tendance à relever le volet 23.

Le ballonnet retard 25, en se gonflant dans le même temps, a tendance à plaquer le volet 23 sur le fond du boîtier retard 11 et donc à empêcher la contreplaque 22 de se relever sous l'effet de la tension de la sangle 15.

Comme le ballonnet 25 du boîtier retard 11 est percé d'un (ou de plusieurs) trou(s) 27 calibré(s), celui-ci a tendance à se dégonfler progressivement sous le double effet de la différence de pression et de l'effort provoqué par l'appui de la contreplaque 22 sur le volet 23.

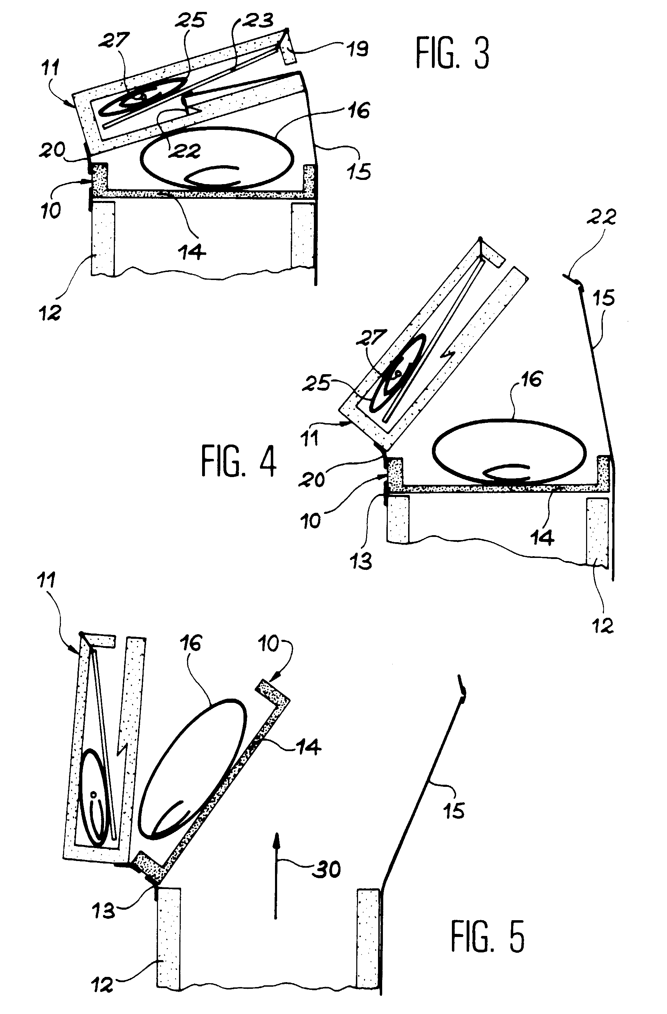

Le dégonflement lent du ballonnet retard 25 libère progressivement l'espace suffisant pour autoriser le volet 23 à se relever jusqu'à laisser le passage à la contreplaque 22. La figure 3 montre l'état du dispositif à l'instant où la contreplaque 22 est complètement relevée et prête à s'échapper du boîtier retard 11.

La figure 4 montre la sangle 15 complètement sortie du boîtier retard 11.

Lorsque la sangle a libéré le boîtier retard 11, plus aucun effort ne retient le boîtier moteur 10 qui faisait office de couvercle du conteneur. Le contenu du conteneur peut alors en exerçant un effort très faible 30, relever le boîtier moteur pour sortir du conteneur, comme représenté sur la figure 5. Si nécessaire, ce faible effort peut être apporté par un petit ressort de torsion monté sur la charnière entre le boîter moteur et le conteneur.

## Revendications

1. Dispositif assurant la fermeture et, après déclenchement, l'ouverture retardée d'un récipient (12), ledit dispositif (10, 11) formant un couvercle coiffant un orifice dudit récipient et comprenant des moyens pneumatiques de rappel (16; 25) assurant et retardant l'ouverture dont le déclenchement s'opère par sa mise instantanée dans un environnement de très faible pression.

2. Dispositif selon la revendication 1, caractérisé en ce qu'il comprend au moins un boîtier (10 ; 11) muni de moyens d'articulation (13 ; 20) avec ledit récipient (12) situés en un premier emplacement, de moyens de fermeture (15) situés en un second emplacement, et les moyens pneumatiques de rappel (16 ; 25) enclenchés lors du changement de pression.

3. Dispositif selon la revendication 2, caractérisé en ce que les moyens pneumatiques de rappel comprennent au moins un ballonnet étanche (16 ; 25) contenant de l'air à la pression atmosphérique, un espaceur (17 ; 26) en forme de "U" étant disposé dans ce ballonnet (16 ; 25).

4. Dispositif selon la revendication 3, caractérisé en ce que chaque ballonnet (16 ; 25) est constitué d'un boudin thermosoudé à ses deux extrémités après introduction de l'espaceur (17 ; 26).

5. Dispositif selon la revendication 2, caractérisé en ce que les moyens d'articulation (13 ; 20) comprennent un morceau de ruban adhésif.

6. Dispositif selon la revendication 2, caractérisé en ce que les moyens de fermeture (15) comprennent une sangle.

7. Dispositif selon l'une quelconque des revendications précédentes, caractérisé en ce qu'il comprend deux boîtiers superposés (10 ; 11) : un premier boîtier (10) assurant la fermeture à pression atmosphérique et l'ouverture à très faible pression, et un second boîtier (11) assurant la fonction de retard à l'ouverture.

8. Dispositif selon la revendication 7, caractérisé en ce que le second boîtier (11) comprend un ballonnet retard (25) percé d'un (ou de plusieurs) trou(s) calibré(s) (27) dont le diamètre correspond à un temps déterminé de retard à l'ouverture.

9. Dispositif selon la revendication 8, caractérisé en ce que le premier boîtier (10), qui constitue par son corps (14) le couvercle du récipient (12), est relié à ce récipient (12) sur un côté par L'intermédiaire d'un premier morceau de ruban adhésif (13) faisant office de charnière, et est maintenu en position fermée grâce à une sangle (15) fixée d'une part sur le côté du récipient (12) opposé à la charnière (13) et d'autre part enclenchée dans le second boîtier (11) ; en ce que ce premier boîtier (10) contient un premier ballonnet étanche (16) contenant un premier espaceur élastique en forme de "U" ; en ce que le second boîtier (11) est fixé sur le premier boîtier (10), de la même manière que le premier boîtier (10) est fixé sur le récipient (12), par l'intermédiaire d'un second morceau de ruban adhésif (20) faisant office de charnière, le corps (19) de ce second boîtier (11) comportant sur sa partie inférieure un décalage (21) servant de butée de verrouillage pour une contreplaque (22) fixée à L'extrémité de la sangle (15) par un troisième morceau de ruban adhésif permettant à la contreplaque de s'articuler autour de l'extrémité de la sangle (15), un volet (23) étant articulé dans le coin supérieur du corps (19) de ce second boîtier (11) par l'intermédiaire d'un fil (24) passant au travers de trous percés dans ce corps (19) et dans le volet (23), et en ce que le ballonnet retard (25), percé d'un (ou de plusieurs) trou(s) calibrés, constitué de façon identique au premier ballonnet (16), et contenant un second espaceur élastique (26) en forme de "U", est logé au-dessus du volet (23), ce volet étant rappelé vers le bas grâce à l'élasticité de cet espaceur (26).

## Patentansprüche

1. Vorrichtung zum Verschließen und, nach Auslösung, zeitverschobenen bzw. verzögerten Öffnen eines Behälters (12), wobei diese Vorrichtung (10, 11) einen Deckel bildet, der eine Öffnung des besagten Behälters bedeckt und pneumatische, die Öffnung bewirkende und verzögernde Rückstelleinrichtungen (16; 25) umfaßt, deren Auslösung dadurch erfolgt, daß man sie plötzlich einer Umgebung mit sehr niedrigem Druck aussetzt.

2. Vorrichtung nach Anspruch 1, dadurch gekennzeichnet, daß sie wenigstens ein mit Gelenken bzw. Scharnieren (13; 20) versehenes Gehäuse (10; 11) umfaßt, mit dem an einer ersten Stelle befindlichen Behälter (12), den an einer zweiten Stelle befindlichen Verschlußeinrichtungen (15) und den pneumatischen Rückstelleinrichtungen (16; 25), in Gang gesetzt bei der Druckveränderung.

3. Vorrichtung nach Anspruch 2, dadurch gekennzeichnet, daß die pneumatischen Rückstelleinrichtungen wenigstens ein dichtes Ballonett (16; 25) umfassen, das Luft mit atmosphärischem Druck enthält, und einen U-förmigen Abstandshalter (17; 26), untergebracht in diesem Ballonett (16; 25).

4. Vorrichtung nach Anspruch 3, dadurch gekennzeichnet, daß dieses Ballonett (16; 25) gebildet wird durch eine nach Einführung des Abstandshalters (17; 26) an ihren beiden Enden warmverschweißte Wurst bzw. wurstförmige Hülle.

5. Vorrichtung nach Anspruch 2, dadurch gekennzeichnet, daß die Gelenkeinrichtungen (13; 20) ein Klebebandstück umfassen.

6. Vorrichtung nach Anspruch 2, dadurch gekennzeichnet, daß die Verschlußeinrichtungen (15) einen Riemen bzw. Gurt umfassen.

7. Vorrichtung nach einem der vorangehenden Ansprüche, dadurch gekennzeichnet, daß sie zwei übereinander angeordnete Gehäuse (10; 11) umfaßt: ein erstes Gehäuse (10), das den Verschluß bei atmosphärischem Druck und die Öffnung bei sehr niedrigem Druck sicherstellt, und ein zweites Gehäuse (11), das die Öffnungsverzögerungsfunktion sicherstellt.

8. Vorrichtung nach Anspruch 7, dadurch gekennzeichnet, daß das zweite Gehäuse (11) ein Verzögerungsballonett (25) enthält, durchbohrt von einem (oder mehreren) kalibrierten Loch (Löchern) (27), wobei der Durchmesser einer bestimmten Öffnungsverzögerungszeit entspricht.

9. Vorrichtung nach Anspruch 8, dadurch gekennzeichnet, daß das erste Gehäuse (10), das durch seinen Körper (14) den Deckel des Behälters (12) bildet, auf einer Seite mit diesem Behälter (12) durch ein erstes, als Gelenk bzw. Scharnier dienendes Klebebandstück (13) verbunden ist und in Verschlußstellung gehalten wird dank eines Gurts (15), einerseits befestigt auf der dem Scharnier (13) gegenüberliegenden Seite des Behälters (12) und andererseits eingehakt in dem zweiten Gehäuse (11); dadurch, daß das erste Gehäuse (10) ein erstes dichtes Ballonett (16) enthält, einen ersten elastischen U-förmigen Abstandshalter enthaltend; dadurch, daß das zweite Gehäuse (11) auf dem ersten Gehäuse (10) durch ein zweites, als Scharnier dienendes Klebebandstück (20) befestigt ist, in gleicher Weise wie das erste Gehäuse (10) auf dem Behälter (12) befestigt ist, wobei der Körper (19) dieses zweiten Gehäuses (11) in seinem unteren Teil einen Überhang (21) umfaßt, der einer Gegenplatte (22) als Verriegelungsanschlag dient, die am Ende des Gurts (15) durch ein drittes Klebebandstück befestigt ist, das die Gegenplatte um das Ende des Gurts (15) herum gelenkig macht, und wobei eine Klappe (23) angelenkt ist in der oberen Ecke des Körpers (19) dieses zweiten Gehäuses (11) mittels eines Drahts (24), der durch in den Körper (19) und in die Klappe (23) gebohrte Löcher verläuft; und dadurch, daß das Verzögerungsballonett (25), durchbohrt von einem (oder mehreren) kalibrierten Loch (Löchern), gebildet wie das erste Ballonet (16) und einen zweiten elastischen U-förmigen Abstandshalter (26) enthaltend, sich über der Klappe (23) befindet, wobei diese Klappe nach unten rückgestellt wird dank der Elastizität diese Abstandshalters (26).

## Claims

1. Device ensuring the closure and, after being triggered, the delayed opening of a receptacle (12), the said device (10, 11) forming a lid covering an orifice of the said receptacle and comprising pneumatic return means (16; 25) ensuring and delaying the opening, triggering of which takes place by being temporarily placed in a very low pressure environment.

2. Device according to Claim 1, characterized in that it comprises at least one housing (10; 11) equipped with means (13; 20) of articulation to the said receptacle (12), these means being situated at a first location, closure means (15) situated at a second location, and the pneumatic return means (16; 25) which are set in action upon the change in pressure.

3. Device according to Claim 2, characterized in that the pneumatic return means comprise at least one leaktight bladder (16; 25) containing air at atmospheric pressure, a U-shaped spacer (17; 26) being arranged inside this bladder (16; 25).

4. Device according to Claim 3, characterized in that each bladder (16; 25) consists of a tube which is thermally welded at both ends after the spacer (17; 26) has been inserted.

5. Device according to Claim 2, characterized in that the articulation means (13; 20) comprise a piece of adhesive tape.

6. Device according to Claim 2, characterized in that the closure means (15) comprise a strap.

7. Device according to any one of the preceding claims, characterized in that it comprises two superimposed housings (10; 11): a first housing (10) ensuring closure at atmospheric pressure and opening at a very low pressure, and a second housing (11) ensuring the function of delaying the opening.

8. Device according to Claim 7, characterized in that the second housing (11) comprises a delay bladder (25) pierced with one (or more) calibrated hole(s) (27) of which the diameter corresponds to a given time by which opening is delayed.

9. Device according to Claim 8, characterized in that the first housing (10), which by means of its body (14) constitutes the lid of the receptacle (12), is connected to this receptacle (12) on one side via a first piece of adhesive strip (13) acting as a hinge, and is held in the closed position thanks to a strap (15) fixed on the one hand to the opposite side of the receptacle (12) to the hinge (13) and on the other hand engaged in the second housing (11); in that this first housing (10) contains a first leaktight bladder (16) containing a first U-shaped elastic spacer; in that the second housing (11) is fixed to the first housing (10) in the same way as the first housing (10) is fixed to the receptacle (12), by means of a second piece of adhesive tape (20) acting as a hinge, the body (19) of this second housing (11) including on its lower part a discontinuity (21) acting as a locking stop for a cover plate (22) fixed to the end of the strap (15) by a third piece of adhesive tape allowing the cover plate to be articulated about the end of the strap (15), a flap (23) being articulated in the upper corner of the body (19) of this second housing (11) via a filament (24) passing through holes pierced in this body (19) and in the flap (23), and in that the delay bladder (25) pierced with one (or more) calibrated hole(s), constructed in the same way as the first bladder (16) and containing a second U-shaped elastic spacer (26), is housed above the flap (23), this flap being returned downwards thanks to the elasticity of this spacer (26).
